# EUROPEAN PATENT SPECIFICATION

(11) **EP 4 702 095 B1**
(45) Date of publication and mention of the grant of the patent: **14.10.2026**
(21) Application number: 24732793.5
(22) Date of filing: 30.05.2024
(51) Int. Cl.: C08L 71/12

(54) **POLYPHENYLENE ETHER COMPOSITION WITH IMPROVED DUCTILITY AND MOLDING PERFORMANCE**
POLYPHENYLENETHERZUSAMMENSETZUNG MIT VERBESSERTER DUKTILITÄT UND FORMLEISTUNG
COMPOSITION DE POLY(ÉTHER DE PHÉNYLÈNE) PRÉSENTANT UNE DUCTILITÉ ET UNE PERFORMANCE DE MOULAGE AMÉLIORÉES

(30) Priority: 31.05.2023 EP 23176292
(43) Date of publication of application: 04.03.2026
(73) Proprietor: SHPP Global Technologies B.V., 4612 PX Bergen op Zoom (NL)
(72) Inventor: MAO, Rui, Shanghai 201319 (CN); SONG, Shijie, Shanghai 201319 (CN)
(74) Representative: Modiano, Gabriella Diana
(86) International application number: PCT/IB2024/055264
(87) International publication number: WO 2024/246802

(56) References cited:
- WO-A1-2021/186252
- CN-A- 101 805 508

## Description

### FIELD OF THE DISCLOSURE

The present disclosure relates to materials including polyphenylene ether, and in particular to polyphenylene ether materials suitable for processing methods involving injection molding.

### BACKGROUND

Phase shifters are a critical component in base stations for networks and often include special engineering plastics with customized dielectric constant (Dk) and low loss tangent/dissipation factor (Df) properties. Polyphenylene oxide (PPE) is a useful base resin to produce such engineering plastics because of its excellent dielectric properties. Conventionally, PPE together with different loading of ceramic fillers have been compounded to meet different phases shifter design. However, PPE may be plagued with certain processing disadvantages. PPE itself is very difficult for melt processing, and is often blended with polystyrene (PS) to get desired a melt flowability. Modem phase shifter designs require a customized Dk, and high melt flowability concurrently. Traditional compositions have not met such demanding requirements. Moreover, bubbling often occurs during processing such as injection molding thin and complex structures at high temperatures and speeds. CN 101 805 508 A discloses in embodiments 1-4 and 6-7 compositions comprising polyphenylene oxide (60 pbw), high impact polystyrene (10 to 25 pbw) and SEBS-MAH (5 or 8 pbw).

Accordingly, there remains a need in the art for materials that exhibit tunable dielectric constant (Dk), ultra-low dielectric loss tangent/dissipation factor (Df), ductility, strong mechanical properties and no or minimal bubbling during processing.

These and other shortcomings are addressed by aspects of the present disclosure.

### SUMMARY

Aspects of the disclosure relate to thermoplastic compositions including: from about 20 wt% to about 80 wt% of a polyphenylene ether (PPE); from about 1 wt% to about 30 wt% of a polystyrene resin that does not include a rubber component; and from about 0.01 wt% to about 10 wt% of a chemically reactive impact modifier. The combined weight percent value of all components does not exceed 100 wt% and all weight percent values are based on the total weight of the composition. The composition is resistant to bubbling.

Further aspects of the disclosure relate to articles formed from a composition, wherein the article is a component of a phase shifter for a base station. The thermoplastic composition includes: from about 20 wt% to about 80 wt% of a polyphenylene ether (PPE); from about 1 wt% to about 30 wt% of a polystyrene resin that does not include a rubber component; and from about 0.01 wt% to about 10 wt% of a chemically reactive impact modifier. The combined weight percent value of all components does not exceed 100 wt%, and all weight percent values are based on the total weight of the composition. The article is resistant to bubbling.

The above described and other features are exemplified by the following detailed description, examples, and claims.

### BRIEF DESCRIPTION OF FIGURES

The accompanying figure, which is incorporated in and constitute a part of this specification, illustrate several aspects and together with the description service to explain the principles of the of the disclosure.

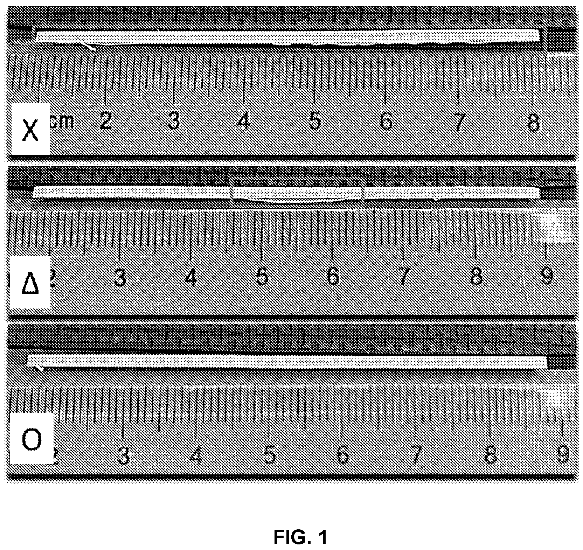

FIG. 1 is an image of molded plaques having varying degrees of bubbling which were used to evaluate the bubbling property described in aspects of the disclosure.

### DETAILED DESCRIPTION

The present disclosure may be understood more readily by reference to the following detailed description of desired aspects and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, computer, antenna and lighting articles.

Those skilled in the art recognize PPE for its good hydrolytic stability, high chemical resistance, good metallization properties, good temperature resistance, and good dimensional stability, among other properties. These features are desirable in the production of a number of products including, but not limited to, exterior automotive parts, housing for wireless devices, and phase shifters for base stations. In base stations for 3G/4G/5G mobile wireless networks, a phase shifter is a critical component to alter direction of signals. The geometry of phase shifter tends to have high aspect ratio (long and thin) and sometimes with complex structure. Thermoplastic materials for base stations generally require high ductility, heat resistance, flow ability, and low Df for less RF signal loss. The Dk values can be varied depending on different designs.

With the continued development of wireless connectivity developments related to for example '5G', the electric properties of PPE are additionally regarded as being an attractive feature; specifically, its favorable dielectric constants and dissipation factor, referred to as Dk/Df. However, one of the challenges faced with using PPE is its brittleness and diminished impact performance. Traditionally blends of PPE and polystyrene (PS), high impact PS and rubber additives are used; the resulting impact performance however is not on par with for example BPA-based polycarbonate. The geometry of phase shifter used in base station typically has a high aspect ratio (long and thin) and complex structure. PPE/PS/TiO₂ based thermoplastic materials, having good flowability, high HDT, low Df, and tunable Dk values, are used for this application depending on the concentration of TiO₂. Based on the high aspect ratio, the phase shifter requires improved ductility to prevent the fracture during manufacture. The desired ductility is conventionally achieved by the incorporation of an impact modifier usually compatible with PPE/PS resin. Still, polymer bubbling is often observed during injection molding processing and may be attributed to poor resin compatibility. Bubble issue is worse where the copolymer has high melt viscosity, for example, higher than 400 Pascal seconds (Pa·s), measured at 310 °C and a shear rate of 1000 reciprocal seconds (1/s) according to ISO11443. This may be attributed to resin phases of the block copolymer being easily elongated and coalesce under shear stress during processing.

European Patent Application EP EP4019590A1 discloses a high dielectric constant, high heat resistant polyphenylene oxide composition. The compositions include a first and second PPE, a general purpose polystyrene, an impact modifier, and an organic ceramic filler.

United States Patent US 10,557,035B2 describes a resin composition for high frequency electronic components including a poly(arylene ether); a high impact polystyrene and general-purpose polystyrene; an impact modifier, and a ceramic filler.

United States Patent US 10,633,537B2 describes thermoplastic compositions including a PPE resin, a polystyrene resin, an impact modifier, a dielectric filler, and an impact promoter including a polycarbonate-siloxane copolymer, a polyolefin-siloxane copolymer, or a combination thereof.

International Patent Application WO 2019186400A1 describes dielectric thermoplastic compositions including a polyarylene ether, a polypropylene, a polystyrene, an impact modifier, a thermally conductive filler, a dielectric ceramic filler.

Compositions according to aspects of the disclosure have improved properties as compared to conventional PPE compositions. Improved properties include, but are not limited to, ductility and impact strength. Furthermore, the compositions are also bubbling resistant, that is they exhibit none or less bubbling as compared to conventional or reference compositions.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of aspects described in the specification.

### Thermoplastic Composition

The disclosed compositions combine poly(phenylene ether), a polystyrene resin that does not include a rubber component, and a chemically reactive impact modifier including a styrenic block copolymer grafted with at least one functional group. The disclosed compositions exhibit improved ductility and impact strength, as well as improved bubble or bubbling performance.

Aspects of the disclosure relate to thermoplastic compositions including: (a) from about 20 wt% to about 80 wt% of a polyphenylene ether (PPE); (b) from about 1 wt% to about 30 wt% of a polystyrene resin that does not include a rubber component; and (c) from about 0.01 wt% to about 15 wt% of an impact modifier, wherein the impact modifier is a functionalized styrenic block copolymer or a styrenic block copolymer grafted with at least one functional group, wherein the combined weight percent value of all components does not exceed 100 wt%, and all weight percent values are based on the total weight of the composition. In some aspects the composition exhibits a notched Izod impact strength of at least 18 kJ/m², when tested in accordance with ISO 180, and/or the composition is resistant to bubbling.

The PPE resin may be a high molecular weight polymer based on polyphenylene ether (PPE), and is used to improve properties such as heat distortion temperature (HDT) and creep resistance. PPE may also be referred to by its chemical name poly (2,6-dimethyl-, 1,4-phenylene ether). Suitable examples of PPE resins are available from SABIC and include the NORYL^{™} family of PPE resins.

In some aspects, the impact modifier includes a functionalized, styrene-based block copolymer. In specific examples, the styrene-based block copolymer includes styrene-ethylene-butylene-styrene (SEBS), styrene-butadiene-styrene (SBS). Other suitable styrene-based block copolymers may include, styrene-ethylene-propylene-styrene (SEPS), styrene-[ethylene-(ethylene-propylene)]-styrene (SEEPS), or combinations thereof. In other examples, the ethylene or propylene-based homo- or copolymer includes ethylene, propylene, ethylene-methylacrylate (E-MA), ethylene-butylacrylate (E-BA), ethylene-propylene (EP), ethylene-ethylacrylate (EA), ethylene-vinylacetate (E-VA), or combination thereof. The composition may include from about 1 wt% to about 15 wt% of the impact modifier including a styrene-based block copolymer. In yet further aspects, the chemically reactive impact modifier may further include a functionalized, ethylene or propylene-based homo- or copolymer, or a combination thereof.

Compositions according to aspects of the disclosure have improved properties as compared to conventional PPE compositions. Improved properties include, but are not limited to, ductility and impact strength. Furthermore, the compositions are also resistant to bubbling, that is they exhibit no or less bubbling as compared to conventional or reference compositions in the absence of the chemically reactive impact modifier and/or that include high impact polystyrene.

In certain aspects the composition has a notched Izod impact strength of at least 18 kilojoules per meter (KJ/m²) as determined in accordance with ISO 180. In some aspects the composition has a notched Izod impact strength of at least 12 KJ/m², or at 15 least KJ/m², or at least 18 KJ/m², or at least 20 KJ/m², or at least 22 KJ/m²,or from 10-30 KJ/m², or from 15-30 KJ/m², or from 15-50 KJ/m². The observed impact strength may correspond to a desired ductility for the applications described herein.

In particular aspects an injection molded plaque including the composition is resistant to resin bubbling or exhibits little or no observable bubble. Bubbling may be evaluated by forming an injection molded sample of the composition, removing the sample from the mold, and observing the extent of separation at the surface of the molded sample. Samples may have observed bubbling along a whole side of the surface, or observed bubbling may be limited to a narrow region of the side, or have no bubbling. In certain aspects, bubbling may be characterized according to a scale in which: (1) an "X" indicator corresponds to significant areas or multiple lengths of observed bubbles along the molded part; (2) an "Δ" indicator corresponds to a localized single area or length of observed bubble along the molded part; (3) and an "O" indicated no or no significant areas or lengths of bubble along the molded part.

### Poly(arylene) Ether

In various aspects, the disclosed composition may include a poly(arylene) ether polymer. The term poly(arylene ether) polymer includes polyphenylene ether (PPE) and poly(arylene ether) copolymers; graft copolymers; poly(arylene ether) ionomers; and block copolymers of alkenyl aromatic compounds with poly(arylene ether)s, vinyl aromatic compounds, and poly(arylene ether), and the like; and combinations including at least one of the foregoing. Poly(arylene ether) polymers include polymers having plurality of polymer precursors having structural units of the formula (I): 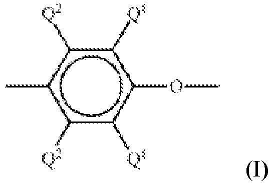 wherein for each structural unit, each Q¹ is independently hydrogen, halogen, primary or secondary lower alkyl (e.g., alkyl containing up to 7 carbon atoms), phenyl, haloalkyl, aminoalkyl, hydrocarbonoxy, halohydrocarbonoxy wherein at least two carbon atoms separate the halogen and oxygen atoms, or the like; and each Q² is independently hydrogen, halogen, primary or secondary lower alkyl, phenyl, haloalkyl, hydrocarbonoxy, halohydrocarbonoxy wherein at least two carbon atoms separate the halogen and oxygen atoms, or the like. In certain aspects, each Q¹ is alkyl or phenyl, especially C14 alkyl, and each Q² is hydrogen.

Both homopolymer and copolymer poly(arylene ether) are included. In some aspects, homopolymers are those containing 2,6-dimethylphenylene ether units. Suitable copolymers include random copolymers containing, for example, such units in combination with 2,3,6-trimethyl-1,4-phenylene ether units or copolymers derived from copolymerization of 2,6-dimethylphenol with 2,3,6-trimethylphenol. Also included are poly(arylene ether) containing moieties prepared by grafting vinyl monomers or polymers such as polystyrenes, as well as coupled poly(arylene ether) in which coupling agents such as low molecular weight polycarbonates, quinones, heterocycles and formals undergo reaction with the hydroxy groups of two poly(arylene ether) chains to produce a higher molecular weight polymer. Poly(arylene ether)s further include combinations including at least one of the above.

The poly(arylene ether) may have a number average molecular weight of about 3,000 grams per mole (g/mol) to about 30,000 g/mol and a weight average molecular weight of about 30,000 to about 60,000 g/mol, as determined by gel permeation chromatography. The poly(arylene ether) can have an intrinsic viscosity of 0.30 to 0.50 deciliters per gram (dL/g), or 0.4 to 0.46 dL/g, or from 0.3 dl/g to 0.42 dl/g, as measured in chloroform at 25°C. It is also possible to utilize a combination of two or more poly(arylene ether) components that respectively have different intrinsic viscosities. Determining an exact ratio, when two intrinsic viscosities are used, will depend somewhat on the exact intrinsic viscosities of the poly(arylene ether) used and the ultimate physical properties that are desired.

In various aspects of the present disclosure, the composition may include a-poly(p-phenylene oxide). In various aspects, the disclosed composition may include a polyphenylene ether such as polyphenylene oxide (a "poly(p-phenylene oxide") PPE. PPE may describe polymers containing optionally substituted phenyl rings linked with oxygen (O) and can be used interchangeably with poly(p-phenylene ether) or poly (2,6 dimethyl-p-phenylene oxide). Further, the disclosed composition may include a specific combination of PPE resins. The polyphenylene oxide may be present as a polyphenylene oxide resin. In further aspects, the polyphenylene oxide may be present as a polyphenylene oxide copolymer. In yet further aspects, the polyphenylene oxide may include or may further include a poly(phenylene ether) siloxane copolymer. The PPE resin may have a weight average molecular weight (Mw) from about 20,000 to 80,000 Daltons.

PPE may describe polymers containing optionally substituted phenyl rings linked with oxygen (O) and can be used interchangeably with poly(p-phenylene ether) or poly (2,6 dimethyl-p-phenylene oxide). Further, the disclosed composition may include a combination of PPE resins that provide the composition with a balance of certain properties. The polyphenylene oxide may be present as a polyphenylene oxide resin. In further aspects, the polyphenylene oxide may be present as a polyphenylene oxide copolymer.

Certain aspects of the composition include from about 20 wt% to about 80 wt% of the poly(phenylene ether)resin or combination thereof, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at most 80 wt%, or at most 79 wt%, or at most 78 wt%, or at most 77 wt%, or at most 76 wt%, or at most 75 wt%, or at most 74 wt%, or at most 73 wt%, or at most 72 wt%, or at most 71 wt%, or at most 70 wt%, or at most 69 wt%, or at most 68 wt%, or at most 67 wt%, or at most 66 wt%, or at most 65 wt%, or at most 60 wt%, or at most 55 wt%, or at most 50 wt%, or at most 45 wt%, or at most 40 wt%, or at most 35 wt%, or at most 30 wt%, or at most 25 wt%, of the poly(phenylene ether)resin or combination thereof. In various aspects, the composition includes a blend of poly(phenylene ether) resins, such as a blend of suitable PPE resins.

### Polystyrene

In various aspects, the disclosed composition may include a polystyrene polymer. The term "polystyrene" as used herein includes polymers prepared by bulk, suspension and emulsion polymerization, which contain at least 25% by weight of polymer precursors having structural units derived from a monomer of the formula (I): 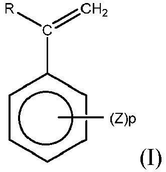 wherein R is hydrogen, lower alkyl or halogen; Z is vinyl, halogen or lower alkyl; and p is from 0 to about 5. Polystyrenes are generally miscible with polyphenylene ether. In certain aspects, the composition may include a general purpose polystyrene. The present composition may include from about 1 wt% to about 30 wt% of a polystyrene such as a general purpose polystyrene polymer In further aspects the polystyrene may include a polystyrene in an amount of from about 2 wt% to about 30 wt%, from about 2 wt% to about 25 wt%, from about 2 wt% to about 20 wt%, from about 3 wt% to about 20 wt%, from about 3 wt% to about 20 wt%, from about 3 wt% to about 15 wt%, from about 5 wt% to about 30 wt%, from about 5 wt% to about 25 wt%, or from about 5 wt% to about 20 wt%, or from about 5 wt% to about 12 wt%. In various aspects, the composition includes at least 2 wt%, at least 3 wt%, at least 4 wt%, or at least 5 wt% of a polystyrene.

Polystyrene components of the present compositions may include general purpose polystyrene (GPPS). The GPPS may represent from about 1 wt% to about 30 wt% of the respective compositions. In certain aspects the polystyrene component is not rubber modified and/or does not include a rubber component. An exemplary rubber component is polybutadiene rubber. High impact polystyrene (HIPS) may be formed by adding rubber or butadiene copolymer to polystyrene. Thus in some aspects, the polystyrene component does not include HIPS. It has been found that compositions according to aspects of the disclosure that include HIPS instead of a non-rubber modified polystyrene component (e.g., GPPS) have poor bubbling properties.

### Impact Modifier

The compositions of the present disclosure may include an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the Izod impact) are improved. In some examples, the chemically reactive impact modifier may be an ethylene or propylene-based homo- or copolymer with reactive functional groups selected from, but not limited to, anhydride, carboxyl, hydroxyl, and epoxy. In other examples, the chemically reactive impact modifier can be a hydrogenated or non-hydrogenated styrenic block copolymer grafted with reactive functional groups including, but not limited to, anhydride, carboxyl, hydroxyl, and epoxy.

In further aspects of the present disclosure, the composition can include a rubber-based impact modifier. The rubber-based impact modifier can be a polymeric material which, at room temperature, is capable of recovering substantially in shape and size after removal of a force. However, the rubber-based impact modifier should typically have a glass transition temperature of less than 0° C. In certain aspects, the glass transition temperature (Tg) can be less than -5° C, -10° C, -15° C, with a Tg of less than -30° C typically providing better performance. Representative rubber-based impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubber-based polymer can contain functional moieties which are grafted onto the polymer in a post polymerization step.

In various aspects, the chemically reactive impact modifier includes a block copolymer grafted with at least one functional group. These functional groups may include, but are not limited to, carboxylic acid, anhydride, glycidyl group and their derivatives. In certain aspects, the impact modifier includes a styrenic block copolymer. For example, the block copolymer may include a styrene-based block copolymer such as a styrene-butadiene-styrene (SBS) copolymer, styrene-ethylene-butadiene-styrene (SEBS) copolymer, styrene-isoprene-styrene (SIS) copolymer, styrene ethylene-propylene-styrene (SEPS) copolymer, or styrene-[ethylene-(ethylene-propylene)]-styrene (SEEPS) or a combination thereof.

In a specific example, the chemically reactive impact modifier includes a maleic anhydride grafted SEBS copolymer (MAH-g-SEBS).

In certain aspects, the impact modifier has a melt viscosity of less than 100 Pa·s when measured in accordance with ISO11443 at a temperature of 310 °C and shear rate of 1000 1/s.

As noted above, in certain examples the resin composite disclosed herein includes from 0.01 wt% to 15 wt%, or from about 0.1 wt% to about 15 wt%, or from about 1 wt% to about 15 wt%, of the impact modifier or chemically reactive impact modifier. In other examples, the resin composite includes at least 0.01 wt%, or at least 0.1 wt%, or at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, of the impact modifier or chemically reactive impact modifier.

In specific aspects the thermoplastic composition does not include a rubber component other than rubber included in the chemically reactive impact modifier.

### Inorganic Filler Including Titanium Oxide or Titanate

In certain aspects the composition includes from about 0.01 wt% to about 50 wt% of a titanium oxide, a titanate, or a combination thereof. In certain aspects the composition includes from about 0.01 wt% to about 50 wt%, or at least 1 wt%, or at least 2 wt%, or at least 4 wt%, or at least 6 wt%, or at least 8 wt%, or at least 10 wt%, or at least 12 wt%, or at least 14 wt%, or at least 16 wt%, or at least 18 wt%, or at least 20 wt%, or at least 22 wt%, or at least 24 wt%, or at least 26 wt%, or at least 28 wt%, or at least 30 wt%, or at most 50 wt%, or at most 45 wt%, or at most 40 wt%, or at most 35 wt%, or at most 30 wt%, or at most 28 wt%, or at most 26 wt%, or at most 24 wt%, or at most 22 wt%, or at most 20 wt%, or at most 18 wt%, or at most 16 wt%, or at most 14 wt%, or at most 12 wt%, or at most 10 wt%, of the titanium oxide, a titanate, or a combination thereof.

In certain aspects, the titanium oxide, a titanate, or a combination thereof may be present at a certain ratio based on the amount of polyphenylene ether in the composition. For example, the wt% ratio of polyphenylene ether to titanium dioxide, titanate or combination thereof may be from 10:1 to 0.5:1, or from 10:1 to 1:1, or from 10:1 to 2:1, or from 10:1 to 2:1, or from 10:1 to 3:1, or from 10:1 to 4:1, or from 10:1 to 5:1, or from 9:1 to 0.5:1, or from 8:1 to 0.5:1, or from 7:1 to 0.5:1, or from 6:1 to 0.5:1, or from 5:1 to 0.5:1, or from 4:1 to 0.5:1, or from 3:1 to 0.5:1, or from 2:1 to 0.5:1, or from 9:1 to 1:1, or from 8:1 to 1:1, or from 7:1 to 1:1, or from 6:1 to 1:1, or from 5:1 to 1:1, or from 4:1 to 1:1, or from 10:1 to 2:1, or from 9:1 to 2:1, or from 8:1 to 2:1, or from 7:1 to 2:1, or from 6:1 to 2:1, or from 5:1 to 2:1, or from 4:1 to 2:1, or from 10:1 to 3:1, or from 9:1 to 3:1, or from 8:1 to 3:1, or from 7:1 to 3:1, or from 6:1 to 3:1, or from 5:1 to 3:1, or from 4:1 to 3:1.

### Additives

The composition can include at least one additive ordinarily incorporated into polymer compositions of this type, with the proviso that the at least one additive is/are selected so as to not significantly adversely affect the desired properties of the thermoplastic composition (good compatibility for example). Such additives can be mixed at a suitable time during the mixing of the components for forming the composition. The at least one additional additive may include, but is not limited to, an acid scavenger, metal deactivator, stabilizer, anti-drip agent, antioxidant, antistatic agent, chain extender, colorant, de-molding agent, flow promoter, lubricant, mold release agent, plasticizer, quenching agent, flame retardant, UV reflecting additive, or a combination thereof. In specific aspects the at least one additive includes an acid scavenger, metal deactivator, stabilizer, mold release agent, or a combination thereof.

The total amount of all of the additives in the resin composition can be, for example, 0.001 to 10 wt% each based on the total weight of the composition. In some aspects, the composition includes at least 0.001 wt%, or at least 0.01 wt%, or at least 0.1 wt%, or at least 0.5 wt%, or at least 1 wt%, or at least 1.1 wt%, or at least 1.2 wt%, or at least 1.3 wt%, or at least 1.4 wt%, or at least 1.5 wt%, or at least 1.6 wt%, or at least 1.7 wt%, or at least 1.8 wt%, or at least 1.9 wt%, or at least 2 wt%, or at least 3 wt%, or at least 4 wt%, or at least 5 wt%, or at least 6 wt%, or at least 7 wt%, or at least 8 wt%, or at least 9 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2.9 wt%, or at most 2.8 wt%, or at most 2.7 wt%, or at most 2.6 wt%, or at most 2.5 wt%, or at most 2.4 wt%, or at most 2.3 wt%, or at most 2.2 wt%, or at most 2.1 wt%, or at most 2 wt%, or at most 1.9 wt%, or at most 1.8 wt%, or at most 1.7 wt%, or at most 1.6 wt%, or at most 1.5 wt%, or at most 1.4 wt%, or at most 1.3 wt%, or at most 1.2 wt%, or at most 1.1 wt%, of the at least one additional additive.

### Methods of Manufacture

The compositions may be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are common. Illustrative examples of equipment used in such melt processing methods include co-rotating and counter-rotating extruders, single screw extruders, co-kneaders, disc-pack processors and various other types of extrusion equipment. The temperature of the melt in the present process may be minimized to avoid excessive degradation of the resins. It is often desirable to maintain the melt temperature between about 230 °C and about 350 °C in the molten resin composition, although higher temperatures can be used provided that the residence time of the resin in the processing equipment is kept short. In some aspects, the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some aspects at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by preextrusion of selected components, such as the poly(arylene ether) component, the polystyrene component(s), and the impact modifier component to produce a pelletized mixture. A second extrusion can then be employed to combine the preextruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components including a resin composition that is formed according to the presently disclosed methods for forming a resin composition.

### Properties and Articles

The disclosed compositions including PPE, PS, and a chemically reactive impact modifier may exhibit improved ductility and resistance to bubble issue or bubbling, while maintaining desirable dielectric properties, when compared to conventional PPE compositions. In certain aspects, the disclosed composites may exhibit good ductility. A sample of the composition may exhibit a notched Izod impact strength of at least 18 kJ/m², when tested in accordance with ISO 180.

Compositions of the present disclosure also exhibit resistance to bubbling during processing. The compositions exhibit little or no cracking, breaking, or separation along a region of an injection molded sample when removed from the mold.

The disclosed compositions further exhibit high heat resistance, high flowability, and improved ductility. The compositions may exhibit a high heat resistance characterized by a heat deflection temperature of greater than 160 °C at 0.45 megapascals (MPa), when tested in accordance with ISO 75. Further, the compositions may exhibit improved ductility which may be characterized by a notched Izod impact strength greater than 15 KJ/m², greater than 18 KJ/m² when tested in accordance with ISO 180. In yet further aspects, compositions according to aspects of the disclosure may exhibit a tensile modulus less than 2300 MPa, less than 2250 MPa, or less than 2225 MPa.

In various aspects, the present disclosure relates to articles including the compositions herein. The compositions can be molded into useful shaped articles by a variety of means such as injection molding, extrusion, rotational molding, blow molding, and thermoforming to form articles. The compositions can be useful in the manufacture of articles requiring materials with good flow, good impact strength, and good dielectric strength. The compositions may be useful for as well as electrically conducting materials.

In various aspects, the present disclosure provides compositions useful for the manufacture of phase shifters for mobile network base stations. Given the properties of the disclosed compositions herein, these materials may provide desirable components for the high aspect ratio, complex structures for base station phase shifters. The disclosed materials maintain the dielectric properties of conventional PPE, such as loss tangent/dissipation factor Df, among others, at frequencies from about 10 GHz and 120 GHz while providing bubbling resistance. The disclosed compositions may be useful as a dielectric plate for a phase shifter for a 5G base station.

The advantageous characteristics of the compositions disclosed herein make them appropriate for an array of uses.

Various combinations of elements of this disclosure are encompassed by this disclosure, for example, combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt%," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

As used herein, the terms "number average molecular weight" or "Mn" can be used interchangeably, and refer to the statistical average molecular weight of all the polymer chains in the sample and is defined by the formula: ${M}_{n} = \frac{\sum {N}_{i} {M}_{i}}{\sum {N}_{i}} ,$ where Mᵢ is the molecular weight of a chain and Nᵢ is the number of chains of that molecular weight. Mₙ can be determined for polymers, for example, polycarbonate polymers, by methods well known to a person having ordinary skill in the art using molecular weight standards, e.g., polycarbonate standards or polystyrene standards, such as certified or traceable molecular weight standards.

As used herein, the terms "weight average molecular weight" or "Mw" can be used interchangeably, and are defined by the formula: ${M}_{w} = \frac{\sum {N}_{i} {{M}_{i}}^{2}}{\sum {N}_{i} {M}_{i}} ,$ where Mᵢ is the molecular weight of a chain and Nᵢ is the number of chains of that molecular weight. Compared to Mₙ, M_{w} takes into account the molecular weight of a given chain in determining contributions to the molecular weight average. Thus, the greater the molecular weight of a given chain, the more the chain contributes to the M_{w}. M_{w} can be determined for polymers, for example, polycarbonate polymers, by methods well known to a person having ordinary skill in the art using molecular weight standards, for example, polycarbonate standards or polystyrene standards, such as certified or traceable molecular weight standards.

As used herein, degree of polymerization, n, may describe the number of monomeric units (or repeating units) in a given polymer molecule.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

In one aspect, "substantially free of" can be less than about 0.5 weight percent (wt%). In another aspect, substantially free of can be less than about 0.1 wt%. In another aspect, substantially free of can be less than about 0.01 wt%. In yet another aspect, substantially free of can be less than about 100 ppm. In yet another aspect, substantially free can refer to an amount, if present at all, below a detectable level. In one aspect, the compositions of the present disclosure are free of or substantially free of carbon filler or carbon-based filler.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### EXAMPLES

The following examples are put forth so as to provide those of ordinary skill in the art with a complete disclosure and description of how the compounds, compositions, articles, devices and/or methods claimed herein are made and evaluated and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, for example, component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various PPE resins were prepared from the raw materials presented in Table 1.

**Table 1 - Materials**

| **Component** | **Description** | **CAS number** | **Product supplier** |
|---|---|---|---|
| PPE1 | Poly(2,6-dimethyl-1,4-phenylene ether), having an intrinsic viscosity of 0.4 deciliter/gram, determined at 25 °C in chloroform by Ubbelohde viscometer. | 25134-01-4 | SABIC |
| PPE2 | Poly(2,6-dimethyl-1,4-phenylene ether), having an intrinsic viscosity of 0.46 deciliter/gram, determined at 25 °C in chloroform by Ubbelohde viscometer. | 25134-01-4 | SABIC |
| GPPS | STYRON 680A, General purpose polystyrene | 9003-53-6 | Trinseo |
| IM1 | SEBS G1651, Polystyrene-poly(ethylene/butylene)-polystyrene triblock copolymer, having a polystyrene content of 33 wt% and melt viscosity of 422 Pa·s | 66070-58-4 | Kraton |
| IM2 | SEBS A1535, Polystyrene-poly(ethylene/butylene)-polystyrene triblock copolymer, having a polystyrene content of 57 wt% and melt viscosity of 176 Pa·s | 66070-58-4 | Kraton |
| IM3 | SEBS A1536, Polystyrene-poly(ethylene/butylene)-polystyrene triblock copolymer, having a polystyrene content of 42 wt% and melt viscosity of 120 Pa·s | 66070-58-4 | Kraton |
| IM4 | SEBS G1652, Polystyrene-poly(ethylene/butylene)-polystyrene triblock copolymer, having a polystyrene content of 30 wt% and melt viscosity of 63 Pa·s | 66070-58-4 | Kraton |
| MAH-IM5 | SEBS FG1901, Maleic anhydride grafted polystyrene-poly(ethylene/butylene)-polystyrene triblock copolymer, having a polystyrene content of 30 wt% and melt viscosity of 32 Pa·s | 66070-58-4 | Kraton |
| TiO₂ | Titanium dioxide | 13463-67-7 | Chemours |
| Additives | One or more of acid scavengers, metal deactivators, stabilizers, and mold release agents. | | |

Formulations were prepared by extruding the pre-blended components using a twin extruder. Pellets were compounded using a Toshiba^{™} TEM-37BS Twin Screw Extruder co-rotating twin screw extruder. Compounding profiles are shown in Table 2.

**Table 2 - Temperature profiles for compounding**

| Compounder Type | \ | TEM-37BS |
|---|---|---|
| Zone 1 temperature | °C | 50 |
| Zone 2 temperature | °C | 150 |
| Zones 3-6 temperature | °C | 280 |
| Zone 7-12 temperature | °C | 290 |
| Die temperature | °C | 290 |

Injection molding conditions are shown in Table 3. Injection was performed on Sumitomo DEMAG SE180EV molding machine for plaques and FANUC S-2000i 100A molding machine for bars for tensile/impact/HDT tests.

**Table 3 - Specimen injection molding conditions**

| Molding parameters | unit | Value |
|---|---|---|
| Pre-drying time | Hour | 4 |
| Pre-drying temperature | °C | 120 |
| Zone 1 temperature | °C | 280-290 |
| Zone 2 temperature | °C | 290-300 |
| Zone 3 temperature | °C | 300-310 |
| Nozzle temperature | °C | 300-310 |
| Mold temperature | °C | 120 |

The melt viscosity of the polystyrene-poly(ethylene/butylene)-polystyrene triblock copolymers in Table 1 was measured at 310 °C and shear rate of 1000 1/s in accordance with ISO11443. Formulations were evaluated for the following properties: melt flow rate (MFR) and melt flow volume rate (MVR) at 300 °C, 5 kilogram load, according to ASTM D1238 and ISO1133, respectively, and values are provided in grams per 10 minutes (g/10 min); tensile testing at a speed of 5 millimeters per minute (mm/min) for filled examples in Table 4 and 50 mm/min for unfilled examples in Table 6, according to ISO 527; notched Izod impact, according to ISO 180; heat distortion temperature (HDT) at 0.45 MPa on 4 mm thick bars, according to ISO 75; dielectric constant (Dk) and loss tangent/dissipation factor (Df), measured on 75 × 75 × 2.5 mm plaques at 1.9 GHz, using SABIC internal method with QWED split post dielectric resonator and Agilent PNA network analyzer. The bubbling phenomena was evaluated based on injection molded plaques having a size of 75 × 75 × 1.5 mm for filled examples in Table 4 and a thickness of 0.5mm for unfilled examples in Table 6. The severity of bubble issue was categorized according to the indicators X, Δ, and O as shown in FIG. 1 showing a lateral view of the molded plaques. An X indicator corresponded to significant areas or multiple lengths of bubble along the molded part; Δ corresponded to a localized single area or length of bubble along the molded part; and O indicated no or no significant areas or lengths of bubble along the molded part.

Comparative and example compositions including one or more of the components in Table 1 were prepared as set forth in Table 4:

**Table 4 - Comparative and Example Compositions**

| | **C.Ex.1** | **C.Ex.2** | **C.Ex.3** | **C.Ex.4** | **Ex.1** | **Ex.2** | **Ex.3** |
|---|---|---|---|---|---|---|---|
| PPE1 | 63.7 | 63.7 | 63.7 | 63.7 | 63.7 | 63.7 | 63.7 |
| TiO₂ | 17 | 17 | 17 | 17 | 17 | 17 | 17 |
| IM2 | 8 | | | | | | |
| IM3 | | 8 | | | | | |
| IM4 | | | 8 | 6 | | 6 | 4 |
| MAH-IM5 | | | | | 4 | 2 | 4 |
| IM1 | | | | | 4 | | |
| GPPS | 10 | 10 | 10 | 11 | 10 | 10 | 10 |
| Additives | 1.3 | 1.3 | 1.3 | 1.3 | 1.3 | 1.3 | 1.3 |

Table 5 shows the properties observed for the respective formulations. Ex.1, Ex.2 and Ex.3 included MAH-g-SEBS and showed no bubbling. Particularly, Ex.2 and Ex.3 showed very high impact strength and low melt viscosity with MAH-IM5 and IM4. C.Ex.1, C.Ex.2 and C.Ex.4 showed low impact strength and bubbling. In particular, while C.Ex.4 included less SEBS, it still had a bubbling problem. C.Ex.3 showed improved impact strength, but not as high as Ex.2 and Ex.3, and still suffered from bubbling.

Without wishing to be bound by any particular theory, it is believed that Ex.1, Ex.2 and Ex.3 exhibited no bubbling because of the addition of MAH-g-SEBS, where the maleic anhydride group improved the compatibility of SEBS with PPE/PS/TiO₂ matrices. The maleic anhydride may increase the polarity of the EB block and may potentially react with PPE molecules and the coating on TiO₂ particle surface. In addition, MAH-IM5 is compatible with other non-functionalized SEBS (for example, IM1 (G1651) and IM4 G1652)) and can function as compatibilizer for the non-functionalized SEBS. The improved compatibility of FG1901 to PPE/PS/TiO2 matrices may also hinder rubber coalescence and the formation of lamellar rubber phase morphology. The low impact strength of C.Ex.1 and C.Ex.2 are primarily due to a lower rubber concentration in IM2 (A1535), IM3 (A1536). The low impact strength of C.Ex.4 was attributed to the lower SEBS content. Ex.2 and Ex.3 showed higher impact strength than C.Ex.3, which was attributed to MAH-IM5 (FG1901) having better compatibility with the polymer matrices than IM4 (G1652). The relatively lower impact strength of Ex.1 compared to Ex.2 and Ex.3 is attributed to the high melt viscosity of IM1 (G1651). IM1 may not have been well-dispersed in the resin because of its higher viscosity, and may not have been well-dispersed to form a rubber phase for effective impact modification.

**Table 5 - Properties of Table 4 Compositions**

| | **C.Ex.1** | **C.Ex.2** | **C.Ex.3** | **C.Ex.4** | **Ex.1** | **Ex.2** | **Ex.3** |
|---|---|---|---|---|---|---|---|
| MFR, g/10min | 10 | 13 | 14 | 13 | 8 | 14 | 11 |
| Tensile modulus, MPa | 2586 | 2508 | 2299 | 2523 | 2214 | 2093 | 2082 |
| Tensile strength, MPa | 65.4 | 62.5 | 55 | 61.7 | 58.7 | 54.9 | 56.6 |
| Tensile Elongation, break, % | 21.0 | 13.9 | 52.8 | 60.3 | 20.3 | 57.4 | 75.9 |
| Notched Izod impact, kJ/m² | 6.6 | 9.1 | 23.7 | 13.5 | 18.5 | 43 | 36 |
| HDT (0.45MPa), °C | 173 | 175 | 172 | 173 | 172 | 172 | 172 |
| Dk (1.9Ghz) | 3.0 | 3.0 | 3.0 | 3.0 | 3.0 | 3.0 | 3.0 |
| Df (1.9GHz) | 0.001 | 0.001 | 0.001 | 0.001 | 0.001 | 0.001 | 0.001 |
| Bubbling Observed | X | X | Δ | Δ | O | O | O |

Additional comparative and example compositions were prepared and tested as set forth in Table 6, which shows the same effect of MAH-IM5 (FG1901) on improved impact strength and resistance to bubbling for examples Ex.4 and Ex.5.

**Table 6 - Comparative and Example Compositions Including MAH-IM5**

| **Components** | **C.Ex.5** | **Ex.4** | **Ex**. **5** | **C.Ex.6** |
|---|---|---|---|---|
| PPE2 | 74 | 70 | 70 | 67 |
| MAH-IM5 | | 8 | 6 | 12 |
| IM1 | 4 | | | |
| GPPS | 20 | 20 | 22 | 19 |
| Additives | 2 | 2 | 2 | 2 |

| **Results** | | | | |
|---|---|---|---|---|
| MVR, cm³/10min | 9 | 18 | 14 | 15 |
| Tensile modulus, MPa | 2600 | 2300 | 2510 | 1798 |
| Tensile strength, MPa | 77 | 64 | 74 | 55 |
| Tensile Elongation, break, % | 9 | 13 | 10.5 | 24 |
| Notched Izod impact, kJ/m² | 5.6 | 26 | 5.4 | 71 |
| HDT (0.45MPa), °C | 165 | 161 | 161 | 159 |
| Dk (1.9Ghz) | 2.6 | 2.6 | 2.6 | 2.6 |
| Df (1.9GHz) | 0.001 | 0.001 | 0.001 | 0.001 |
| Bubbling Observed | X | O | O | X |

Comparative compositions corresponding to Ex.2 and Ex.4 but that included high impact polystyrene (HIPS) instead of GPPS were prepared and tested as shown in Table 7:

**Table 7 - Comparative Compositions Including HIPS**

| **Components** | **C.Ex.7 Comparing to Ex.2** | **C.Ex.8 Comparing to Ex.4** |
|---|---|---|
| PPE1 | 63.7 | |
| PPE2 | | 70 |
| TiO₂ | 17 | |
| IM4 | 6 | |
| MAH-IM5 | 2 | 8 |
| IM1 | | |
| HIPS | 10 | 20 |
| Additives | 1.3 | 2 |
| Total (wt%) | 100 | 100 |
| | | |

| **Properties** | | |
|---|---|---|
| MFR, g/10min | 12 | |
| MVR, cm³/0 min | | 10 |
| Tensile modulus, MPa | 2183 | 2158 |
| Tensile strength, MPa | 57 | 58 |
| Tensile Elongation, break, % | 48 | 9 |
| Notched Izod impact, kJ/m² | 49 | 52 |
| HDT (0.45MPa), °C | 173 | 163 |
| Dk (1.9Ghz) | 3.0 | 2.55 |
| Df (1.9GHz) | 0.0015 | 0.0018 |
| Bubbling Observed | X | X |

It was observed from the results that compositions including HIPS had significant bubbling (X indicator), in contrast to the example compositions which had no bubbling (O indicator). Compare Ex.2 to C.Ex.7 and Ex.4 to C.Ex.8.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, subject matter according to aspects of the disclosure may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a. from 20 wt% to 80 wt% of a polyphenylene ether (PPE);
b. from 1 wt% to 30 wt% of a polystyrene resin that does not comprise a rubber component; and
c. from 0.01 wt% to 10 wt% of a chemically reactive impact modifier,
wherein the combined weight percent value of all components does not exceed 100 wt% and all weight percent values are based on the total weight of the composition, wherein all nominal values include ±10% variation, and
wherein the composition is resistant to bubbling.

2. The thermoplastic composition of claim 1, wherein the composition further comprises from 0.01 wt% to 50 wt% of a titanium oxide, a titanate, or a combination thereof.

3. The thermoplastic composition of claim 1 or 2, comprising from 2 wt% to 10 wt% of the chemically reactive impact modifier.

4. The thermoplastic composition of any one of claims 1-3, wherein the composition comprises from greater than 40 wt% to 80 wt% of the PPE.

5. The thermoplastic composition of any one of claims 1-4, wherein the PPE comprises poly(2,6-dimethyl-1,4-phenylene ether).

6. The thermoplastic composition of any one of claims 1-5, wherein the PPE has an intrinsic viscosity of 0.3 dl/g to 0.5 dl/g when determined at 25 °C in chloroform using a viscometer.

7. The thermoplastic composition according to any one of claims 1-6, wherein the polystyrene resin consists of general purpose polystyrene (GPPS).

8. The thermoplastic composition according to any one of claims 1-7, wherein the polystyrene resin does not comprise high impact polystyrene (HIPS).

9. The thermoplastic composition of any one of claims 1-8, wherein chemically reactive impact modifier comprises a styrenic block copolymer grafted with at least one functional group.

10. The thermoplastic composition of claim 9, wherein the at least one functional group comprises a carboxylic acid, acid anhydride, glycidyl group, or a derivative thereof, grafted to the at least one block copolymer.

11. The thermoplastic composition of claim 9 or 10, wherein the styrenic block copolymer comprises a styrene-butadiene-styrene (SBS) copolymer, styrene-ethylene-butylene-styrene (SEBS) copolymer, styrene-isoprene-styrene (SIS) copolymer, styrene-ethylene-propylene-styrene (SEPS) copolymer, or a styrene-[ethylene-(ethylene-propylene)]-styrene (SEEPS) copolymer.

12. The thermoplastic composition of any one of claims 1-11, wherein the chemically reactive impact modifier comprises maleic anhydride grafted SEBS (MAH-g-SEBS).

13. The thermoplastic composition of any one of claims 1-12, wherein the chemically reactive impact modifier has a melt viscosity of less than 100 Pa·s when measured in accordance with ISO11443 at a temperature of 310 °C and shear rate of 1000 1/s.

14. The thermoplastic composition according to any one of claims 1-13, wherein the thermoplastic composition further comprises at least one additional additive, wherein the at least one additional additive comprises an acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

15. An article formed from a composition, wherein the article is a component of a phase shifter for a base station, and the thermoplastic composition comprises:
a. from 20 wt% to 80 wt% of a polyphenylene ether (PPE);
b. from 1 wt% to 30 wt% of a polystyrene resin that does not comprise a rubber component; and
c. from 0.01 wt% to 10 wt% of a chemically reactive impact modifier,
wherein the combined weight percent value of all components does not exceed 100 wt%, and all weight percent values are based on the total weight of the composition, wherein all nominal values include ±10% variation, and
wherein the article is resistant to bubbling.

## Patentansprüche

1. Eine thermoplastische Zusammensetzung, die Folgendes umfasst:
a. 20 bis 80 Gewichtsprozent eines Polyphenylenethers (PPE);
b. 1 bis 30 Gewichtsprozent eines Polystyrolharzes, das keine Kautschukkomponente umfasst; und
c. 0,01 bis 10 Gewichtsprozent eines chemisch reaktiven Elastifikators,
wobei die kombinierten Gewichtsprozentwerte aller Komponenten 100 Gewichtsprozent nicht überschreiten und alle Gewichtsprozentwerte auf dem Gesamtgewicht der Zusammensetzung basieren, wobei alle Nominalwerte eine Schwankungsbreite von ±10% einschließen, und
wobei die Zusammensetzung resistent gegenüber Blasenbildung ist.

2. Die thermoplastische Zusammensetzung gemäß Anspruch 1, die weiter 0,01 Gewichtsprozent bis 50 Gewichtsprozent eines Titanoxids, eines Titanats oder einer Kombination davon umfasst.

3. Die thermoplastische Zusammensetzung gemäß Anspruch 1 oder 2, die 2 bis 10 Gewichtsprozent des chemisch reaktiven Elastifikators umfasst.

4. Die thermoplastische Zusammensetzung gemäß einem beliebigen der Ansprüche 1-3, die mehr als 40 Gewichtsprozent bis 80 Gewichtsprozent des PPE umfasst.

5. Die thermoplastische Zusammensetzung gemäß einem beliebigen der Ansprüche 1-4, worin das PPE Poly(2,6-dimethyl-1,4-phenylenether) umfasst.

6. Die thermoplastische Zusammensetzung gemäß einem beliebigen der Ansprüche 1-5, wobei das PPE eine Grenzviskosität von 0,3 dl/g bis 0,5 dl/g hat, bestimmt bei 25°C in Chloroform mit einem Viskosimeter.

7. Die thermoplastische Zusammensetzung gemäß einem beliebigen der Ansprüche 1-6, wobei das Polystyrolharz aus allgemein verwendbarem Polystyrol (general purpose polystyrene, GPPS) besteht.

8. Die thermoplastische Zusammensetzung gemäß einem beliebigen der Ansprüche 1-7, wobei das Polystyrolharz kein hochschlagfestes Polystyrol (high impact polystyrene, HIPS) umfasst.

9. Die thermoplastische Zusammensetzung gemäß einem beliebigen der Ansprüche 1-8, worin der chemisch reaktive Elastifikator ein Styrolblockcopolymer umfasst, auf das mindestens eine Funktionsgruppe aufpolymerisiert wurde.

10. Die thermoplastische Zusammensetzung gemäß Anspruch 9, wobei die mindestens eine Funktionsgruppe eine Carbonsäure, ein Säureanhydrid, eine Glycidylgruppe oder ein Derivat davon umfasst, aufpolymerisiert auf das mindestens eine Blockcopolymer.

11. Die thermoplastische Zusammensetzung gemäß Anspruch 9 oder 10, worin das Styrolblockcopolymer ein Styrol-Butadien-Styrol- (SBS-)Copolymer, Styrol-Ethylen-Butylen-Styrol-(SEBS-)Copolymer, Styrol-Isopren-Styrol- (SIS-)Copolymer, Styrol-Ethylen-Propylen-Styrol- (SEPS-)Copolyer oder ein Styrol-[Ethylen-(Ethylen-Propylen)]-Styrol-(SEEPS-)Copolymer umfasst.

12. Die thermoplastische Zusammensetzung gemäß einem beliebigen der Ansprüche 1-11, worin der chemisch reaktive Elastifikator Maleinsäureanhydrid-aufgepfropftes SEBS (MAH-g-SEBS) umfasst.

13. Die thermoplastische Zusammensetzung gemäß einem beliebigen der Ansprüche 1-12, worin der chemisch reaktive Elastifikator eine Schmelzviskosität von weniger als 100 Pa·s hat, gemessen nach ISO11443 bei einer Temperatur von 310°C, und eine Scherrate von 1000 1/s.

14. Die thermoplastische Zusammensetzung gemäß einem beliebigen der Ansprüche 1-13, die weiter mindestens einen Zusatzstoff umfasst, wobei der mindestens eine Zusatzstoff einen Säurefänger, ein Antitropfmittel, Antioxidans, Antistatikum, einen Kettenverlängerer, einen Farbstoff, ein Entformungsmittel, eine Fließhilfe, ein Schmiermittel, ein Formtrennmittel, einen Weichmacher, ein Ablöschmittel, ein Flammverzögerungsmittel, einen UV-reflektierenden Zusatzstoff oder eine Kombination davon umfasst.

15. Ein aus einer Zusammensetzung geformter Gegenstand, wobei der Gegenstand eine Komponente eines Phasenschiebers für eine Basisstation ist und die thermoplastische Zusammensetzung Folgendes umfasst:
a. 20 bis 80 Gewichtsprozent eines Polyphenylenethers (PPE);
b. 1 bis 30 Gewichtsprozent eines Polystyrolharzes, das keine Kautschukkomponente umfasst; und
c. 0,01 bis 10 Gewichtsprozent eines chemisch reaktiven Elastifikators,
wobei die kombinierten Gewichtsprozentwerte aller Komponenten 100 Gewichtsprozent nicht überschreiten und alle Gewichtsprozentwerte auf dem Gesamtgewicht der Zusammensetzung basieren, wobei alle Nominalwerte eine Schwankungsbreite von ±10% einschließen, und
wobei der Gegenstand resistent gegenüber Blasenbildung ist.

## Revendications

1. Une composition thermoplastique comprenant :
a. de 20 % en poids à 80 % en poids d'un éther de polyphénylène (PPE) ;
b. de 1 % en poids à 30 % en poids d'une résine de polystyrène ne comprenant pas un composant de caoutchouc ; et
c. de 0,01 % en poids à 10 % en poids d'un modificateur de résistance aux chocs chimiquement réactif,
où le valeur des pourcentages en poids combinés de tous les composants ne dépasse pas 100 % en poids et tous les valeurs des pourcentages en poids sont rapportées au poids total de la composition, où toutes les valeurs nominales comportent une variation de ± 10 %, et
où la composition est résistante à la formation de bulles.

2. Composition thermoplastique selon la revendication 1, où la composition comprend en outre
de 0,01 % en poids à 50 % en poids d'un oxyde de titane, d'un titanate ou d'une combinaison de ceux-ci.

3. Composition thermoplastique selon la revendication 1 ou 2, comprenant de 2 % en poids à 10 % en poids du modificateur de la résistance aux chocs chimiquement réactif.

4. Composition thermoplastique selon l'une quelconque des revendications 1 à 3, où la composition
comprend de plus de 40 % en poids à 80 % en poids de PPE.

5. Composition thermoplastique selon l'une quelconque des revendications 1 à 4, où le PPE comprend
du poly(2,6-diméthyl-1,4-phénylène éther).

6. Composition thermoplastique selon l'une quelconque des revendications 1 à 5, où le PPE présente une
viscosité intrinsèque comprise de 0,3 dl/g à 0,5 dl/g, déterminée à 25 °C dans du chloroforme usant viscosimètre.

7. Composition thermoplastique selon l'une quelconque des revendications 1 à 6, où la résine de polystyrène est constituée de polystyrène à usage général (GPPS).

8. Composition thermoplastique selon l'une quelconque des revendications 1 à 7, où la résine de polystyrène ne comprend pas de polystyrène à haute résistance aux chocs (HIPS).

9. Composition thermoplastique selon l'une quelconque des revendications 1 à 8, où le modificateur de résistance aux chocs chimiquement réactif comprend un copolymère à blocs styréniques greffé avec au moins un groupe fonctionnel.

10. Composition thermoplastique selon la revendication 9, où ledit au moins un groupe fonctionnel comprend un acide carboxylique, un anhydride d'acide, un groupe glycidyle, ou un dérivé de ceux-ci, greffé sur ledit au moins un copolymère à blocs.

11. Composition thermoplastique selon la revendication 9 ou 10, où le copolymère à blocs styréniques comprend un copolymère styrène-butadiène-styrène (SBS), un copolymère styrène-éthylène-butylène-styrène (SEBS), un copolymère styrène-isoprène-styrène (SIS), un copolymère styrène-éthylène-propylène-styrène (SEPS), ou un copolymère styrène-[éthylène-(éthylène-propylène)]-styrène (SEEPS).

12. Composition thermoplastique selon l'une quelconque des revendications 1 à 11, où le modificateur de la résistance aux chocs chimiquement réactif comprend du SEBS greffé avec de d'anhydride maléique (MAH-g-SEBS).

13. Composition thermoplastique selon l'une quelconque des revendications 1 à 12, où le modificateur de résistance aux chocs chimiquement réactif présente une viscosité à l'état fondu inférieure à 100 Pa·s lorsqu'elle est mesurée conformément à ISO 11443 à une température de 310 °C et à un taux de cisaillement de 1000 1/s.

14. Composition thermoplastique selon l'une quelconque des revendications 1 à 13, où la composition thermoplastique comprend en outre au moins un additif supplémentaire, ledit au moins un additif supplémentaire comprenant un piégeur d'acide, un agent anti-goutte, un antioxydant, un agent antistatique, un agent d'allongement de chaîne, un colorant, un agent de démoulage, un promoteur d'écoulement, un lubrifiant, un agent de démoulage, un plastifiant, un agent de trempe, un retardateur de flamme, un additif réfléchissant les UV, ou une combinaison de ceux-ci.

15. Article formé à partir d'une composition, où l'article est un composant d'un déphaseur pour une station de base, et la composition thermoplastique comprend :
a. de 20 % en poids à 80 % en poids d'un éther de polyphénylène (PPE) ;
b. de 1 % en poids à 30 % en poids d'une résine de polystyrène ne comprenant pas de composant de caoutchouc ; et
c. de 0,01 % en poids à 10 % en poids d'un modificateur de résistance aux chocs chimiquement réactif,
où le valeur des pourcentages en poids combinés de tous les composants ne dépasse pas 100 % en poids, et tous les valeurs des pourcentages en poids sont rapportées au poids total de la composition, où toutes les valeurs nominales incluent une variation de ±10 %, et où l'article est résistant à la formation de bulles.
